# DEMANDE DE BREVET EUROPEEN

(11) **EP 2 202 440 A1**
(43) Date de publication de la demande: **30.06.2010**
(21) Numéro de dépôt: 09180231.4
(22) Date de dépôt: 21.12.2009
(51) Int. Cl.: F16L 21/03, F16L 57/00

(54) **Dispositif et procédé pour assurer la qualité d'un emboîtement de tubes**

(30) Priorité: 22.12.2008 FR 0807343
(71) Demandeur: Alphacan, 78170 La Celle-Saint-Cloud (FR)
(72) Inventeur: Mestres, Philippe, 78290 Croissy sur Seine (FR); Paquier, François, 45190 Beaugency (FR)
(74) Mandataire: Michardière, Bernard

(57) **Abrégé**

Dispositif pour assurer la qualité de l'emboîtement d'une extrémité mâle (3) d'un tube dans une extrémité femelle (1) d'un autre tube, comprenant un moyen de raclage (D) propre à racler la surface extérieure de l'extrémité mâle (3) sur son pourtour lors de l'emboîtement, ce moyen de raclage étant disposé sur l'une des deux extrémités mâle ou femelle.

## Description

L'invention est relative à un dispositif pour assurer la qualité de l'emboîtement d'une extrémité mâle d'un tube dans une extrémité femelle d'un autre tube.

Les utilisateurs de tubes éprouvent des difficultés pour prendre des mesures afin de maintenir les tubes propres en fond de tranchée au moment de l'emboîtement. De ce fait, les extrémités mâles et/ou femelles peuvent être salies par de la boue, du sable, du gravier ou autres éléments indésirables.

Lorsque de tels corps étrangers ne sont pas retirés des parties mâles ou femelles au moment de l'emboîtement, il peut en résulter des défauts tels que : dégradations et rayures importantes de l'extrémité mâle par des granulats introduits entre l'extrémité femelle et l'extrémité mâle, ce qui peut provoquer une perte d'étanchéité au niveau d'un joint prévu entre l'extrémité mâle et l'extrémité femelle. Il en est de même lorsque les granulats viennent se positionner entre le joint et l'extrémité mâle, la perte d'étanchéité pouvant alors survenir sans dégradation de l'état de surface de l'extrémité mâle.

US 2008/136164 concerne un élément d'étanchéité destiné à être installé sur des filetages prévus sur des tuyaux. Des salissures qui viendraient entacher l'élément d'étanchéité seraient insérées dans la partie femelle et pourraient engendrer une perte d'étanchéité.

L'invention a pour but, surtout, de fournir un dispositif qui permet d'assurer de manière simple et efficace, une bonne qualité de l'emboîtement, en empêchant ou tout au moins en limitant les risques de perte d'étanchéité dus à la dégradation des surfaces conjuguées de l'extrémité mâle et de l'extrémité femelle. Il est souhaitable en outre que ce dispositif soit d'une réalisation économique et d'une mise en oeuvre simple.

Selon l'invention, le dispositif pour assurer la qualité de l'emboîtement d'une extrémité mâle d'un tube dans une extrémité femelle d'un autre tube est **caractérisé en ce qu**'il comprend un moyen de raclage propre à racler la surface extérieure de l'extrémité mâle sur son pourtour lors de l'emboîtement, ce moyen de raclage étant disposé sur l'une des deux extrémités mâle ou femelle.

Avantageusement, ce moyen de raclage est réalisé en matière plastique, notamment en polymère, élastomère ou caoutchouc.

Le moyen de raclage peut être préalablement installé sur l'une des deux extrémités, ou être livré séparément du tube.

Dans le cas où le moyen de raclage est préalablement installé sur l'une des deux extrémités mâle ou femelle, il peut être raccordé par une liaison sécable à un disque obturateur de l'extrémité concernée. En variante, le moyen de raclage est relié à un opercule pouvant être arraché, cet opercule fermant l'extrémité concernée. L'opercule peut être autocollant ou thermoscellable.

De préférence, le moyen de raclage comprend une bague cylindrique entourant l'extrémité mâle ou femelle du tube. Cette bague cylindrique peut être reliée par une zone prédécoupée à un disque obturateur. L'obturateur peut être posé séparément de la bague cylindrique.

La bague cylindrique peut être installée autour de l'extrémité femelle, auquel cas elle comporte, au-delà du bord d'extrémité, un retour radial vers l'intérieur qui peut venir racler la surface extérieure du tube mâle lors de l'emboîtement.

Selon une variante, la bague cylindrique installée autour de l'extrémité femelle est reliée à un disque obturateur comportant des fentes radiales le divisant en secteurs angulaires séparés propres à s'effacer vers l'intérieur de l'extrémité femelle lors de l'emboîtement de l'extrémité mâle.

Dans ce cas, le joint d'étanchéité prévu généralement à l'intérieur de l'extrémité femelle est situé à une distance du bord de l'extrémité femelle supérieure au rayon intérieur de cette extrémité femelle de telle sorte que les secteurs repliés à 90° vers l'intérieur du disque obturateur n'atteignent pas le joint d'étanchéité.

Selon une autre variante, le moyen de raclage peut être intégré, d'une seule pièce, avec l'about de l'extrémité femelle, en constituant un retour radial vers l'intérieur. Ce moyen de raclage peut être formé ou usiné sur l'about de l'extrémité femelle ou bien mis en place dans une gorge préformée dans la tulipe avant la gorge recevant le joint.

Selon une autre possibilité, le moyen de raclage comprend une bague cylindrique installée autour de l'extrémité mâle et prévue pour coulisser sur cette extrémité mâle en étant poussée par l'extrémité femelle au moment de l'emboîtement, pour racler alors la surface extérieure du tube mâle.

L'extrémité mâle peut être protégée par un dispositif du type gaine souple.

L'invention est également relative à un procédé d'emboîtement d'une extrémité mâle d'un tube dans une extrémité femelle d'un autre tube, en particulier disposé en fond de tranchée, **caractérisé en ce que :**
- avant l'emboîtement on installe un moyen de raclage autour de l'une des deux extrémités mâle ou femelle, propre à racler la surface extérieure de l'extrémité mâle sur son pourtour ;
- et on engage l'extrémité mâle dans l'extrémité femelle de sorte que le moyen de raclage nettoie la surface extérieure de l'extrémité mâle avant son entrée en contact avec un joint disposé dans la partie femelle.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une demi-coupe verticale partielle de l'extrémité femelle d'un tube équipée d'un moyen de raclage selon l'invention.
Fig. 2 est une vue en perspective, à plus petite échelle, de l'extrémité femelle équipée du moyen de raclage et d'un disque obturateur.
Fig. 3 est un schéma illustrant l'emboîtement en cours d'une extrémité mâle de tube dans l'extrémité femelle de Fig. 1.
Fig. 4 est une coupe diamétrale partielle d'une extrémité femelle de tube équipée d'une variante du moyen de raclage.
Fig. 5 est une vue en perspective, à plus petite échelle, de l'extrémité femelle de Fig. 4 équipée du moyen de raclage et de l'obturateur divisé en secteurs angulaires par des fentes radiales.
Fig. 6 est une demi-coupe axiale schématique illustrant l'emboîtement de l'extrémité mâle dans l'extrémité femelle de Fig. 4.
Fig. 7 est une coupe axiale d'une extrémité femelle équipée d'un moyen de raclage selon l'invention avec opercule autocollant.
Fig. 8 est une demi-coupe axiale d'une variante de réalisation avec moyen de raclage disposé sur l'extrémité mâle du tube.
Fig. 9 est une vue en perspective, à plus petite échelle, de l'extrémité mâle du tube de Fig.8 équipée du moyen de raclage avec disque obturateur.
Fig. 10 est une demi-coupe axiale schématique illustrant l'emboîtement du tube mâle de Fig. 8 dans l'extrémité femelle.
Fig. 11 est une demi-coupe axiale partielle d'une variante de réalisation avec moyen de raclage d'une seule pièce avec l'extrémité femelle.
Fig. 12 est une coupe partielle schématique illustrant une variante de moyen de raclage installée sur l'extrémité mâle de tube.
Fig. 13 illustre, semblablement à Fig. 12, une autre variante de moyen de raclage installée en bout de l'extrémité femelle, et
Fig. 14 illustre une autre variante à deux lèvres du moyen de raclage installé en bout de l'extrémité femelle.

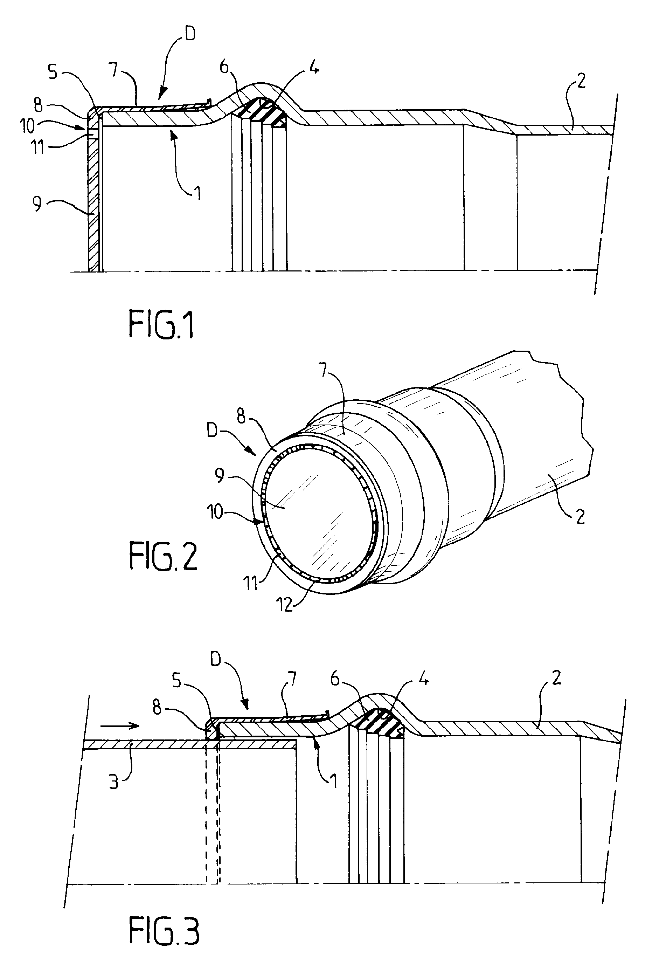

En se reportant aux Fig. 1-3 des dessins, on peut voir une extrémité femelle 1 d'un tube 2 sur laquelle est installé un moyen de raclage D selon l'invention. Le tube 2, dans l'exemple considéré, est en matière plastique, notamment en PVC. L'extrémité femelle 1 présente un diamètre intérieur agrandi pour recevoir l'extrémité mâle 3 (Fig. 3) d'un autre tube. L'extrémité femelle 1 est souvent appelée « tulipe » et comporte une gorge interne 4, à distance du bout 5, gorge dans laquelle est logé un joint annulaire 6 prévu pour coopérer avec l'extrémité mâle 3.

L'invention n'est pas limitée à des tubes en matière plastique et peut s'appliquer à des tubes en une autre matière, par exemple à des tubes métalliques ou à des tubes en béton.

Le moyen de raclage D réalisé en matière plastique, notamment en polymère, comprend une bague cylindrique 7 entourant l'extrémité femelle 1 du tube. Cette bague 7 comporte, au-delà du bout 5 de l'extrémité, un retour 8 radial vers l'intérieur, formant une sorte de collerette qui fait légèrement saillie vers l'intérieur par rapport à la surface interne de l'extrémité 1, pour former une arrête de raclage.

La bague 7 est reliée à un disque obturateur 9 par une zone prédécoupée 10 comportant une succession d'ouvertures 11 séparées par des branches radiales 12 assurant la liaison avec le retour 8. Le disque 9 constitue un bouchon sécable, dans un plan orthogonal à l'axe de l'extrémité femelle.

En variante, l'obturateur peut être posé séparément de la bague cylindrique 7.

Pour réaliser l'emboîtement de l'extrémité mâle 3 dans l'extrémité femelle 1, comme illustré sur Fig. 3, l'utilisateur sépare le disque obturateur 9 du retour 8 suivant la zone prédécoupée, de sorte que seuls subsistent le retour radial 8 et la bague 7.

L'extrémité mâle 3 est alors introduite dans l'extrémité femelle 1, comme indiqué par la flèche sur Fig.3. Le bord radial intérieur du retour 8, légèrement en saillie sur la surface interne de l'extrémité 1, forme une arête de raclage sur tout le pourtour de l'extrémité mâle 3 qui est ainsi nettoyée de tout corps étranger au fur et à mesure de son introduction dans l'extrémité femelle 1. Une étanchéité de bonne qualité est établie lorsque l'extrémité mâle 3 a franchi le joint 6. En effet, le nettoiement de l'extrémité mâle 3 assuré par le moyen de raclage D évite la dégradation de la surface extérieure de cette extrémité, par exemple évite les rayures, ainsi que l'introduction de graviers ou granulats sous le joint 6.

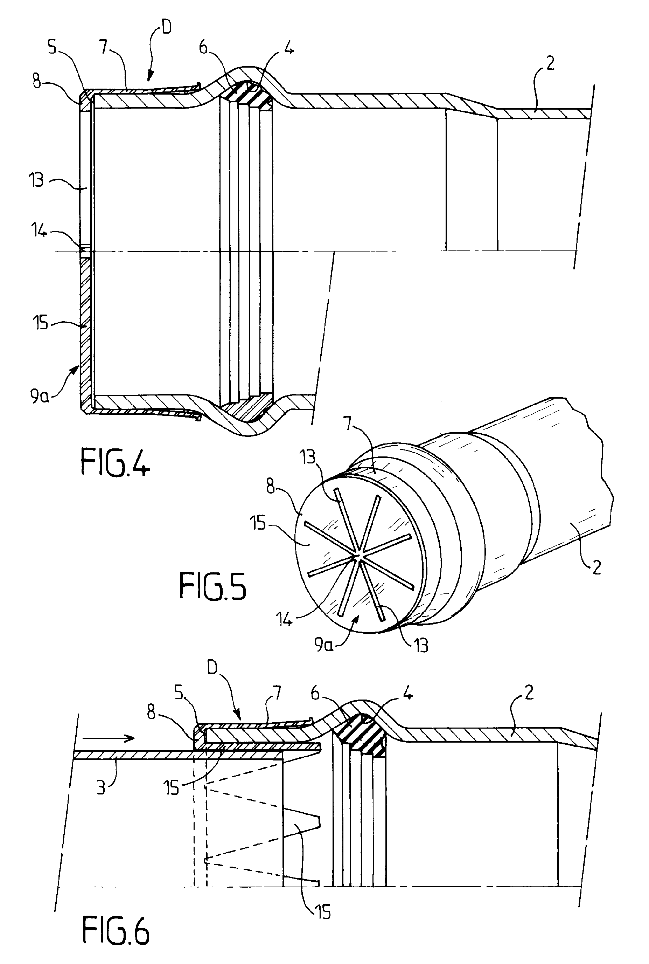

En se reportant aux Fig. 4-6 on peut voir une variante de réalisation selon laquelle la bague cylindrique 7, installée autour de l'extrémité femelle 1, est reliée à un disque obturateur 9a comportant des fentes radiales 13 s'étendant depuis le retour 8 de la bague jusqu'à une ouverture centrale 14. Des secteurs angulaires 15 sont ainsi déterminés entre deux fentes successives 13. Le nombre de ces secteurs 15 est choisi suffisamment élevé pour que l'ensemble conserve une certaine souplesse au repliement vers l'intérieur. Par exemple le nombre de secteurs angulaires 15, peut être de l'ordre de huit ou plus, chaque secteur ayant un même angle d'ouverture.

Les fentes 13 et l'ouverture centrale 14 ont des dimensions suffisamment réduites pour empêcher l'entrée de la plupart des corps étrangers, notamment gravier, dans l'extrémité femelle 1.

L'emboîtement de l'extrémité mâle dans l'extrémité femelle 1 est illustré sur Fig. 6. En poussant l'extrémité mâle 3 dans l'extrémité femelle 1, suivant le sens de la flèche de Fig.6, on provoque le repli à 90° des secteurs 15 vers l'intérieur de l'extrémité femelle 1. Les secteurs 15 viennent s'appliquer contre la surface interne de cette extrémité femelle et assurent, par leur autre face, le raclage de l'extrémité mâle 3.

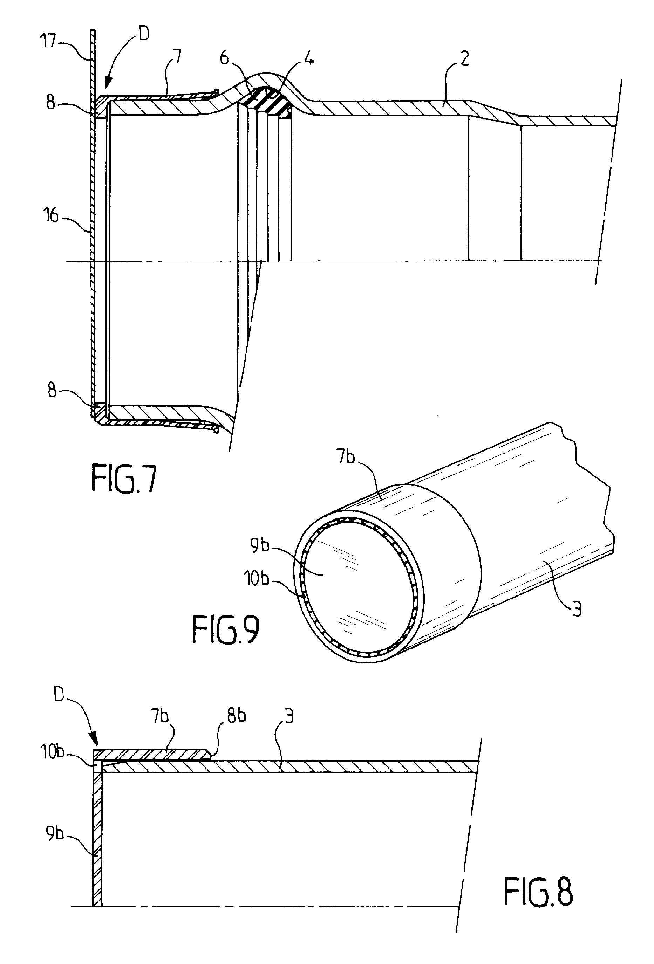

Fig. 7 montre une variante de réalisation selon laquelle le moyen de raclage D comprend toujours une bague cylindrique 7 avec retour radial 8, installée autour de l'extrémité femelle 1. Le retour 8 est libre, dépourvu de disque obturateur. La fermeture de l'entrée de l'extrémité femelle 1 est assurée par un opercule 16 collé contre le retour 8. L'opercule 16 peut être autocollant, ou en une matière thermosoudable collée au retour 8 par chauffage. L'opercule 16 comporte une languette de décollage 17 en saillie radiale vers l'extérieur.

Pour l'emboîtement, l'utilisateur sépare l'opercule 16 du dispositif D de raclage en tirant sur la languette 17 de manière à dégager le retour 8 formant arête de raclage. L'emboîtement peut alors être réalisé dans les mêmes conditions que celles de Fig. 3.

En se reportant aux Fig. 8-10, on peut voir une variante selon laquelle la bague cylindrique 7b du moyen de raclage D entoure l'extrémité mâle 3 du tube. L'arête de raclage 8b est constituée par le bout de la bague 7b éloigné de l'ouverture de l'extrémité mâle 3.

La bague cylindrique 7b est reliée, du côté opposé à l'arête de raclage 8b, par une zone annulaire prédécoupée 10b à un disque obturateur 9b qui ferme l'extrémité mâle 3. La zone prédécoupée 10b comporte des ouvertures et des branches radiales semblables à celles de la zone 10 de Fig.2.

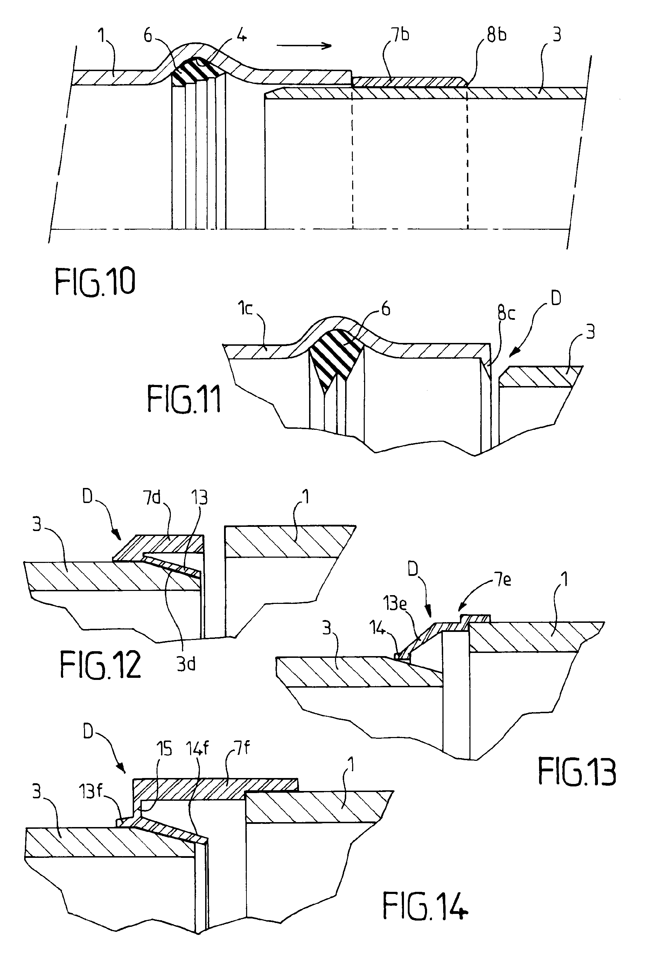

Pour l'emboîtement de l'extrémité mâle 3 dans l'extrémité femelle 1, comme illustré sur Fig. 10, le disque obturateur 9b est séparé de la bague cylindrique 7b. La zone prédécoupée 10b est prévue de telle manière qu'aucun retour radial vers l'intérieur ne subsiste sur le bord de la bague cylindrique 7b éloigné de l'arête de raclage 8b.

L'extrémité mâle 3 est présentée dans l'extrémité femelle 1 de telle manière que le bord de l'extrémité femelle 1 pousse la bague cylindrique 7b qui glisse sur l'extrémité mâle 3 au fur et à mesure de l'emboîtement. L'arête de raclage 8b nettoie ainsi la surface extérieure de l'extrémité mâle 3 sur tout son pourtour.

Fig. 11 montre une autre variante de réalisation selon laquelle le dispositif racleur D est constitué par un retour radial 8c vers l'intérieur sur le bout de l'extrémité femelle 1c. La section transversale du retour 8c présente une forme triangulaire se terminant en pointe en direction de l'axe de l'extrémité femelle 1c pour conférer au retour 8c une certaine élasticité de flexion. Des fentes radiales peuvent être prévues dans le retour 8c pour augmenter son élasticité. Le retour 8c peut être formé et/ou usiné directement sur l'about de l'extrémité femelle 1c. En variante, le moyen de raclage peut être mis en place dans une gorge préformée dans la tulipe avant la gorge recevant le joint.

Lors de l'emboîtement, le tube mâle 3 est raclé par le retour radial 8c, avant d'atteindre le joint 6.

Fig. 12 illustre une variante de réalisation du dispositif de raclage D constitué par une bague cylindrique 7d montée en bout de l'extrémité mâle 3 du tube. La surface extérieure du bout du tube est chanfreinée selon une surface tronconique 3d contre laquelle est en appui une lèvre 13 liée à la bague 7d, à son extrémité éloignée de l'ouverture de l'extrémité 3.

Lorsque l'extrémité mâle 3 est emboîtée dans l'extrémité femelle 1, l'about de cette dernière pousse la bague 7d sur l'extrémité mâle 3. La lèvre 13 est relevée et l'espace en V compris entre la lèvre 13 et la surface cylindrique intérieure de la bague 7d se ferme pour permettre à la lèvre 13 de glisser sur la surface supérieure de l'extrémité mâle 3. Le moyen de raclage D de Fig. 12 est indépendant du dispositif obturateur (non représenté) de l'extrémité 3 du tube. La bague 7d, avec sa lèvre 13, peut être livrée séparément du tube et installée en bout de ce dernier, par exemple au moment où il est placé en attente dans une tranchée.

Fig. 13 montre une variante de réalisation selon laquelle le moyen de raclage D comprend une bague 7e montée en bout de la partie femelle 1. Cette bague 7e est solidaire d'une lèvre 13e formant une jupe tronconique dont la grande base est solidaire de la bague 7e et dont la petite base, avantageusement munie d'un patin 14, assure le raclage du tube mâle 3 lors de l'emboîtement.

Fig. 14 montre une variante 7f de la bague formant racleur montée en bout de l'extrémité femelle 1. La bague 7f comporte deux lèvres 13f, 14f solidaires de la bague proprement dite par un retour radial 15.

La lèvre 13f forme une collerette cylindrique en saillie axiale du côté opposé à l'extrémité femelle 1, et entoure de manière coulissante la partie cylindrique de l'extrémité mâle 3. La lèvre 14f est tournée vers l'extrémité femelle 1 et constitue une jupe tronconique souple qui peut s'appuyer contre le chanfrein de l'extrémité mâle 3. La lèvre 14f comporte généralement des fentes radiales pour lui conférer une souplesse suffisante.

Lors de l'emboîtement, la progression de l'extrémité mâle 3 vers l'extrémité femelle 1 provoque le soulèvement de la lèvre 14f. Le raclage de l'extrémité mâle 3 est assuré par les deux lèvres 13f, 14f.

Le dispositif racleur D selon l'invention peut être livré séparément du tube, notamment selon les variantes Fig. 12-14 ou préinstallé sur le tube avec le disque obturateur ou l'opercule de fermeture. Le dispositif de raclage permet de limiter les dégradations de l'extrémité mâle du tube et les risques de fuites qui pourraient être provoquées par des corps étrangers déposés sur cet embout mâle.

Il est à noter que le dispositif racleur D n'assure pas de fonction d'étanchéité, mais une fonction de nettoyage de la partie mâle s'insérant dans la partie femelle. Une fois l'emboîtement effectué, le dispositif racleur n'exerce plus sa fonction de nettoyage.

Dans la plupart des variantes, le dispositif racleur D reste extérieur à l'emboîture avant, pendant et après l'opération d'emboîtement, procurant une barrière contre les salissures venant de l'extérieur.

Le dispositif racleur D est propre à diminuer le transport de salissures par la partie mâle vers le joint d'étanchéité équipant l'intérieur de la partie femelle.

L'extrémité mâle, ou bout mâle, pourrait le cas échéant être protégée par un dispositif du type gaine souple qui serait à rouler ou à éplucher au fur et à mesure de l'enfoncement.

L'invention concerne non seulement des tubes en PVC, notamment pour adduction d'eau, mais également des tubes en d'autres matières, acier ou béton par exemple, dont l'assemblage doit présenter une qualité suffisante pour l'étanchéité.

## Revendications

1. Dispositif pour assurer la qualité de l'emboîtement d'une extrémité mâle (3) d'un tube dans une extrémité femelle (1) d'un autre tube, **caractérisé en ce qu'**il comprend un moyen de raclage (D) propre à racler la surface extérieure de l'extrémité mâle (3) sur son pourtour lors de l'emboîtement, ce moyen de raclage étant disposé sur l'une des deux extrémités mâle (3) ou femelle (1).

2. Dispositif selon la revendication 1, **caractérisé en ce que** le moyen de raclage (D) est réalisé en matière plastique.

3. Dispositif selon la revendication 1 ou 2, **caractérisé en ce que** le moyen de raclage (D) est préalablement installé sur l'une des deux extrémités mâle (3) ou femelle (1).

4. Dispositif selon la revendication 3, **caractérisé en ce que** le moyen de raclage (D) est raccordé par une liaison sécable (10, 10b) à un disque obturateur (9, 9b) de l'extrémité concernée.

5. Dispositif selon la revendication 3, **caractérisé en ce que** le moyen de raclage (D) est relié à un opercule (16) pouvant être arraché, cet opercule fermant l'extrémité concernée.

6. Dispositif selon l'une quelconque des revendications précédentes, **caractérisé en ce que** le moyen de raclage (D) comprend une bague cylindrique (7) entourant l'extrémité femelle (1) ou mâle (3) du tube.

7. Dispositif selon la revendication 6, **caractérisé en ce que** la bague cylindrique est reliée par une zone prédécoupée (10, 10b) à un disque obturateur (9, 9b).

8. Dispositif selon la revendication 6 ou 7, **caractérisé en ce que** la bague cylindrique (7) est installée autour de l'extrémité femelle (1) et comporte, au-delà du bord d'extrémité (5), un retour radial (8) vers l'intérieur qui peut venir racler la surface extérieure du tube mâle (3) lors de l'emboîtement.

9. Dispositif selon la revendication 6, **caractérisé en ce que** la bague cylindrique (7) installée autour de l'extrémité femelle (1) est reliée à un disque obturateur (9a) comportant des fentes radiales (13) le divisant en secteurs angulaires séparés (15) propres à s'effacer vers l'intérieur de l'extrémité femelle lors de l'emboîtement de l'extrémité mâle.

10. Dispositif selon l'une quelconque des revendications 1 à 5, **caractérisé en ce que** le moyen de raclage (D) est intégré, d'une seule pièce, avec l'about de l'extrémité femelle, en constituant un retour radial (8c) vers l'intérieur.

11. Dispositif selon la revendication 6 ou 7, **caractérisé en ce que** la bague cylindrique (7b) est installée autour de l'extrémité mâle (3) et est prévue pour coulisser sur cette extrémité mâle en étant poussée par l'extrémité femelle (1) au moment de l'emboîtement, pour racler la surface extérieure du tube mâle.

12. Dispositif selon l'une quelconque des revendications précédentes, **caractérisé en ce que** l'extrémité mâle est protégée par un dispositif du type gaine souple.

13. Procédé d'emboîtement d'une extrémité mâle d'un tube dans une extrémité femelle d'un autre tube, en particulier disposé en fond de tranchée, **caractérisé en ce que** :
- avant l'emboîtement on installe un moyen de raclage (D) autour de l'une des deux extrémités mâle (3) ou femelle (1), propre à racler la surface extérieure de l'extrémité mâle (3) sur son pourtour ;
- et on engage l'extrémité mâle (3) dans l'extrémité femelle (1) de sorte que le moyen de raclage (D) nettoie la surface extérieure de l'extrémité mâle avant son entrée en contact avec un joint (6) disposé dans la partie femelle.
